# EUROPEAN PATENT SPECIFICATION

(11) **EP 1 936 537 B1**
(45) Date of publication and mention of the grant of the patent: **14.09.2011**
(21) Application number: 08005111.3
(22) Date of filing: 26.03.1999
(51) Int. Cl.: G06K 15/00, G06F 3/12

(54) **On-line state resumption in a printer**
Wiederaufnahme des Online-Zustands in einem Drucker
Résomption de l'état en-ligne dans une imprimante

(30) Priority: 26.03.1998 JP 7970198
(43) Date of publication of application: 25.06.2008
(62) Divisional of application: 99106341.3
(73) Proprietor: Seiko Epson Corporation, Shinjuku-ku Tokyo 163-0811 (JP)
(72) Inventor: Fukano, Kazuko, Suwa-shi Nagano-ken 392-8502 (JP); Kinoshita, Yoshiaki, Suwa-shi Nagano-ken 392-8502 (JP)
(74) Representative: MERH-IP Matias Erny Reichl Hoffmann

(56) References cited:
- EP-A- 0 652 533
- EP-A- 0 780 786
- US-A- 5 533 172

## Description

The present invention relates to a printer, a method of controlling it and an information storage medium.

Today, many electronic devices such as common cash registers, desktop calculators and others are equipped with a printer. These printers are used for printing various types of information on single- or multiple-part forms. In case of cash registers, for instance, the printer is used for printing sales receipts, delivery records, etc.. While the present invention may be particularly useful for these printers, the term "printer" as used in this specification is to be understood in a broader sense covering all types of printing apparatus, such as a stand-alone printer or a printer forming an integral part of and providing a printing function to some other type of apparatus.

One type of form used in printers has perforations defining form units of a specific length in which the particular information is printed. Another type is simply roll paper which is automatically cut or manually torn to length after a desired amount of information has been printed. The term "form" as used in this specification also includes simple cut sheet paper. For the sake convenience, the paper unit printed with a specific set of information will be referred to below as a "receipt", i.e., the term "receipt" is used representative of a variety of forms or sheets printed by a printer irrespective of the length and the information printed on such receipt.

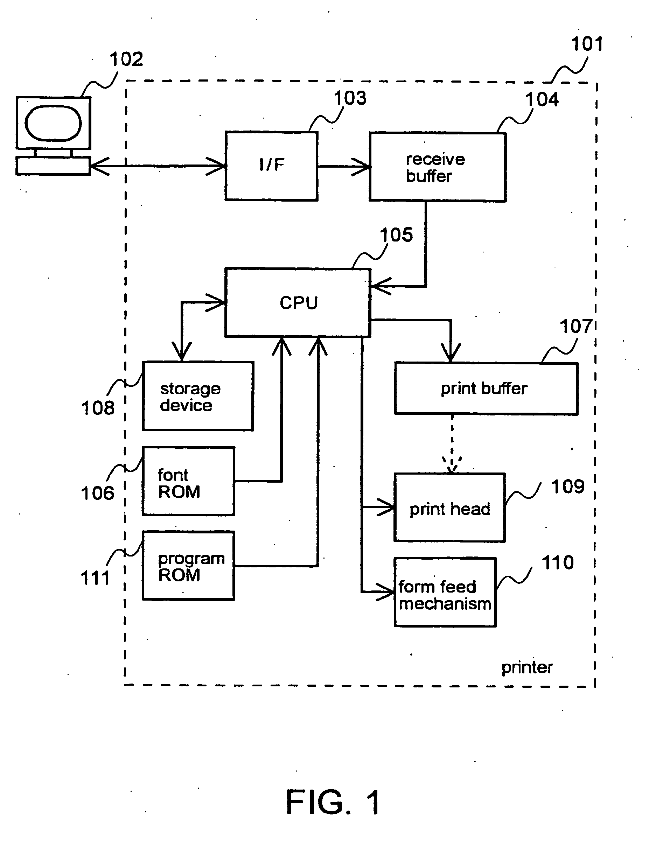

Fig. 1 is a block diagram of the basic configuration of a printer 101 according to the related art. Data representing print data and control commands are sent to the printer 101 from a host 102, which is typically a computer or other data processing device, and is received through an interface 103. The received data is temporarily stored in a receive buffer 104, which is commonly a ring buffer.

The host 102 may be integrated with the printer in the cash register, desktop calculator or other device in which the printer is incorporated or to which it is connected, or it may be a stand-alone general-purpose or specialized computer separate from the printer. Thus, the host 102 could be any device capable of sending data to the printer.

When the host 102 is a computer, a program for controlling the printer 101 typically runs on the host 102. A printer control program run on the host can be easily updated and distributed to users by recording it on a floppy disk, hard disk, CD-ROM, or other computer-readable storage medium. It could also be distributed electronically via a telecommunications network.

A CPU 105 in the printer 101 sequentially reads data from the receive buffer 104. If print data representing text to be printed is read from the receive buffer 104, the CPU 105 obtains associated font information from a font ROM 106, and buffers the information to be printed in a print buffer 107.

When the CPU 105 reads control commands from the receive buffer 104, it controls the printer 101 according to these commands. For example, if the control commands are so-called printer definitions, the CPU 105 updates the corresponding printer definitions stored in a storage device 108. These printer definitions or settings are referenced when the font information is expanded into the print buffer 107, and include, for example, print ratio settings for enlarged or reduced printing, text attributes such as bold, inverted, and underline, the line spacing, and the definition of external fonts.

When the print buffer 107 becomes full, or when a line return command or other command initializing printing is detected, the CPU 105 controls a print head 109 and a form feed mechanism 110 based on the content of the print buffer 107 to print the content of the print buffer 107 on paper. When printing of one line is completed, the form or paper is advanced, and the print buffer 107 is cleared.

Printer operation as described above is controlled by the CPU 105 using a control program stored in program ROM 111 or other storage medium. When the printer 101 is turned on, the CPU 105 loads this program from program ROM 111 or other storage medium and begins operation.

To enable this printer-side control program to be updated as needed, program ROM 111 may be replaced by an SRAM, a flash ROM, or other type of non-volatile rewritable memory. Alternatively, the printer control program could be stored on another information storage medium such as a floppy disk, hard disk, CD-ROM, etc. separate from the printer 101, similarly to the control program on the host side.

Processing by the printer may be interrupted for a variety of reasons. When this occurs, the printer is said to be "off-line" or in the "off-line state" When the reason that caused the printer to go off-line is removed and the printer starts processing again, it is said to "resume operation". Note that in the present specification "resume" always refers to something that happens upon the printer recovering from the off-line state.

Some possible causes for a printer to go off-line are:
(a) No paper (depleted paper supply)
   Using roll paper or continuous perforated forms makes it possible to print a large number of forms and replenish the paper supply less frequently. There is, however, still only a finite number of forms that can be printed before the paper supply must be replenished. Printer operation can typically be resumed once the paper supply is replenished.
(b) Paper jam occurs during printing
   This condition occurs when the paper is not advanced normally, or jams with a paper fold obstructing the print head's (or that of a carriage on which the print head is mounted) movement. The printer can resume operation once the paper jam is removed.
(c) Overheated print head, resulting from printing continuously for an extended period of time.
   When the print head overheats, print head damage can occur and print quality deteriorates. The printer therefore enters the off-line state until the print head temperature drops, and then resumes operation.
(d) The user manually sets the printer off-line
This happens, for example, when the user presses an off-line switch on the operating panel of the printer, or opens the printer cover.

It should be noted that none of these off-line conditions necessarily occurs between forms, i.e., after printing of one form or sheet has been completed and before printing of the next form or sheet is started. In most case the printer will go off-line while just being in the process of printing a form/sheet.

Some known printers resume operation with reprinting the whole page during which the problem causing the printer to enter the off-line state occurred. Such reprinting of the whole page is not always desirable. For example, in a printing operation in which a sales receipt, coupon and warranty are sequentially printed in one transaction, it is preferable to have reprinted necessary pages in accordance with how many pages jammed. Other current printers typically resume operation by continuing to process the data remaining in the receive buffer 104 or print buffer 107. Particularly when the cause of the off-line state was a paper jam or depletion of the paper supply during printing, this usually means that the part of the information printed before the printer goes off-line is on one piece of paper, and the remaining information is printed on new paper after printing is resumed. More specifically, instead of one complete receipt two unusable partial receipts are printed. This is a waste of paper and lowers the efficiency of the printing process.

This does not happen, however, when the printer is turned off and then turned on again, or when a printer reset operation is performed, after the printer resumed operation because in those two cases the receive buffer and the print buffer are cleared. The problem in this case is that the printer definitions stored in the printer are also reset.

EP 0 652 533 A discloses a printer that is adapted to enter an off-line state in response to each of a plurality of off-line reasons and to perform a resumption operation upon recovery from the off-line state. The known printer comprises: receiving means for receiving data representing print data and control commands, respectively, from a host device; a buffer for storing the received data in a FIFO manner; a controller for reading the data stored in said buffer and for processing the read data as long as the printer is in the on-line state. The controller also performs one of plural kinds of resumption operation when the printer has recovered from the off-line state. Memory means have a storage area storing a flag that indicates either one or the other of two resumption operations to be performed upon recovery from the off-line state. A printing unit is provided for printing based on the data stored in said buffer. The known printer has two controllers, a first one responsive to print data and a first class of control commands, and a second one responsive to a second class of control commands, called real-time commands. Processing by the first controller is interrupted while the printer is in the off-line state, whereas processing by the second controller is performed even during the off-line state. The second controller in this prior art is responsive to a predetermined real-time command received and processed while the printer is in the off-line state to set or clear said flag in said storage area and to reset an error state thereby causing the printer to recover form the off-line state.

EP 0 780 786 A discloses a printer having operation panel with a switch to be manually operated. The switch has two different functions depending on the state of the printer. While the normal function of the switch is that of a toggle switch to toggle between the on-line and the off-line state of the printer, the function changes to that of a paper feed switch when it is operated within a predetermined time window just before the printer recovers from a paper-out off-line state.

There is, therefore, a need for the ability to change what is called herein the "resumption operation", i.e., the process or function performed by the printer when it resumes operation, in accordance with what printing operation the host wants the printer to perform.

To meet the above-described need, an object of the present invention is to provide a printer capable of resuming operation upon recovery from the off-line state without printing a wasteful partial receipt and while retaining the printer definitions stored in printer memory. Another object of the present invention is to provide a control method for such printer and an information storage medium carrying, in machine-readable form, a program for implementing the control method.

These objects are achieved with a printer, a method a system and an information storage medium as claimed in the independent claims, respectively. Preferred embodiments are subject-matter of the dependent claims.

The present invention provides a printer in which the resumption operation to be performed upon recovery from the off-line state can be preselected among a plurality of predefined different resumption operations. It is therefore possible to preselect among such resumption operations as continuing the printing process, printing from the beginning of a line that was being printed when the printer went off-line, in the case of a so-called page mode printer, printing from the beginning of the printing area that was being printed when the printer went off-line, etc..

According to an embodiment of the present invention, it is possible to achieve the desired print results when the resumption operation to be performed by the printer after an off-line state fails by resending the print data from a host computer or other information processing device.

The present invention can also be provided as a control method for an information processing device. The control method in this case achieves the same operation and benefits as described above.

A control method according to the present invention can also be provided as a control program to be run by the controller of the information processing device. This control program can be supplied using a recording medium to which the control program is recorded. The control program can also be transferred via the Internet or other computer network, for example, for recording by the user to a recording medium accessible to the user's computer or printing apparatus.

These and other objects and features of the present invention will be readily understood from the following detailed description taken in conjunction with preferred embodiments thereof with reference to the accompanying drawings, in which like parts are designated by like reference numerals and in which:
- Fig. 1: is a block diagram of a printer;
- Fig. 2: is a flow chart used to describe the basic operation of the data receiving process in a printer according to the present invention;
- Fig. 3: is a flow chart used to describe the basic data interpretation, print data generation, and printing process in a printer according to the present invention;
- Fig. 4: is a flow chart used to describe the basic operation of the off-line state and resume selection of the resumption operation in a printer according to the present invention; and
- Fig. 5: is a flow chart used to describe the basic operation of the marker printing process in a printer according to the present invention.

The basic configuration of a printer according to a preferred embodiment of the present invention is the same as that of the prior art printer shown in Fig. 1. A printer according to the present invention, however, provides new functions in response to a new control command. The CPU 105 in the present invention therefore performs additional operations, and the storage device 108 of the present invention stores more information than it does in a prior art printer.

This new control command enables a printer according to the present invention to specify , according to the cause for an off-line state, the resumption operation, which is to be performed following a recovery from that off-line state. When the printer actually recovers from the off-line state the specified resumption operation is then selected and performed.

In the preferred embodiment of the present invention, the interface 103 forms receiving means, the receive buffer 104 or print buffer 107 forms a data buffer, the print head 109 and form feed mechanism 110 together form a printing unit, and the CPU 105 forms a controller. The CPU 105 and storage device 108 together function as selection means and, where applicable, marker means.

In accordance with the present invention the first one, and optionally the second and/or third one, of the following three commands are provided for specifying and preselecting a resumption operation:
(a) Command for specifying the resumption operation: *ESC A n m* (in hexadecimal notation: 1B_{H} 41_{H} n m), where, in the present embodiment, *n* is an integer from 1 to 3, and *m* is an integer from 1 to 4
(b) Set marker command: *ESC B* (1B_{H} 42_{H}), and
(c) Printer re-initialization command: *ESC C* (1B_{H} 43_{H}).

It will be obvious that these command statements can be varied as needed. Furthermore, it should be noted that the set marker command (*ESC B*) and the printer re-initialization command (*ESC B*) provide additional functions, and embodiments without these commands are conceivable.

These commands are described in further detail below.

Command *ESC A n m* is for setting (preselecting) the resumption operation to be performed after recovery from the off-line state in relation to the cause for the off-line state. Parameter *n* indicates the cause of the off-line state. Exemplary values for *n* in this preferred embodiment are:
- n = 1: off-line state caused by an error
- n = 2: off-line state caused by end of roll paper or other continuous form
- n = 3: operator-selected off-line state

Parameter *m* indicates the process to be performed as resumption operation following the off-line state. Exemplary values for *m* in this preferred embodiment are:
- m = 1: *Continue Printing:* This process resumes printing from the beginning of the line that was being printed when the printer went off-line. In a page mode printer, it resumes printing from the beginning of the area that was being printed. If a command was being processed when the printer went off-line, the process continues the command processing.
- m = 2: *Clear Buffers:* This process clears all data in the receive and print buffers before any other process after recovery from the off-line state. Also, the process sends a "data cleared" notification to the host. However, all printer definitions defined by various commands and stored in the printer, if any , are retained. If a command was being processed, the command processing is terminated.
- m = 3: *Marker Printing:* This process is explained in further detail below.
- m = 4: *Re-initialize and Print:* This process is explained in further detail below.

For example, if the host 102 sends the command *ESC A 2 1*, the printer 101 is set to *Continue Printing* after resuming operation from the off-line state resulting from the paper supply running out.

The storage device 108 of the printer 101 has an area for storing the settings specified by the command *ESC A n m.* A respective storage area is provided for each off-line cause *n*, and each of these storage areas has the capacity for storing the value of the parameter *m* that represents a respective preselected resumption operation. In the present embodiment, for example, there are three such storage areas because there are three different causes (*n* = 1, 2, 3), and each storage area comprises 2 bits because the maximum value of the parameter *m* is *m* = 4. A total storage area of 6 bits is therefore required.

It will be obvious that the required size or capacity of the total storage area depends on the number of off-line state causes declared and the number of resumption operations among which to select. Considering simply the convenience of access by the CPU 105, each storage area could also be one byte or word. It is also possible to use a method in which the address of a specific procedure required to perform a desired process is stored, or some other type of information is stored that has a known correlation to the type of resumption operation to be performed.

The basic printer operations are described next. The following processes are performed by the printer 101.
(a) Data sent from host 102 is stored in receive buffer 104.
(b) Data buffered in receive buffer 104 is interpreted; print data is generated in print buffer 107 and printed.
(c) If there is a cause for the off-line state, the printer enters the off-line state and, after recovery, performs a resumption operation.

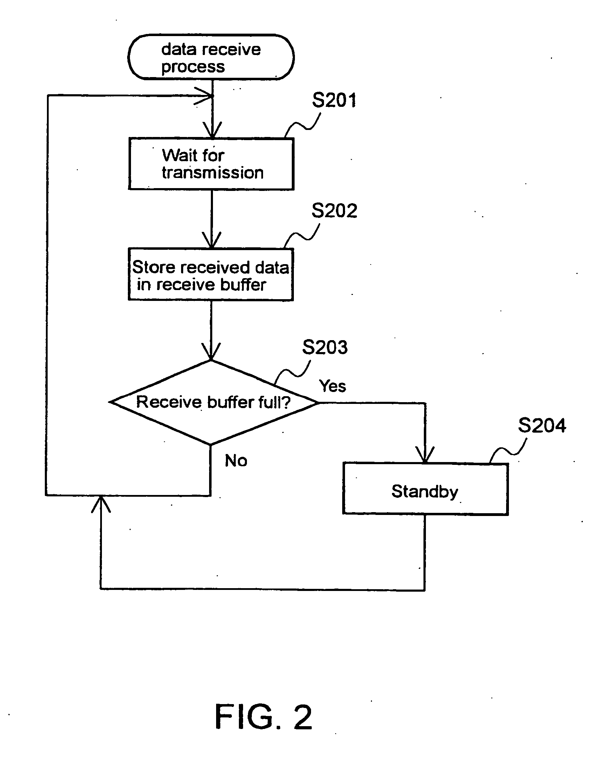

Referring next to Fig. 2, the process (a) for storing data received from the host 102 in receive buffer 104 is described below.
(1) The printer waits for data to be sent from the host 102 (S201).
(2) Received data is added to the end of data already stored in receive buffer 104, if any (S202).
(3) It is detected (S203) whether receive buffer 104 is full. If it is not full, the procedure loops back to the first step (S201).
(4) If step S203 detects receive buffer 104 to be full, no further data is received until receive buffer 104 is at least partially emptied, whereupon the procedure loops back to the first step (S201).

Note that the procedure shown in Fig. 2 can be modified to loop from step S204 to S203 until receive buffer 104 is ready to receive new data. However, by entering a standby state in step S204 and allowing control to pass to another process, the processing capacity of the CPU 105 can be used more efficiently. Note that it is assumed below that a standby state includes allowing control to pass to another process.

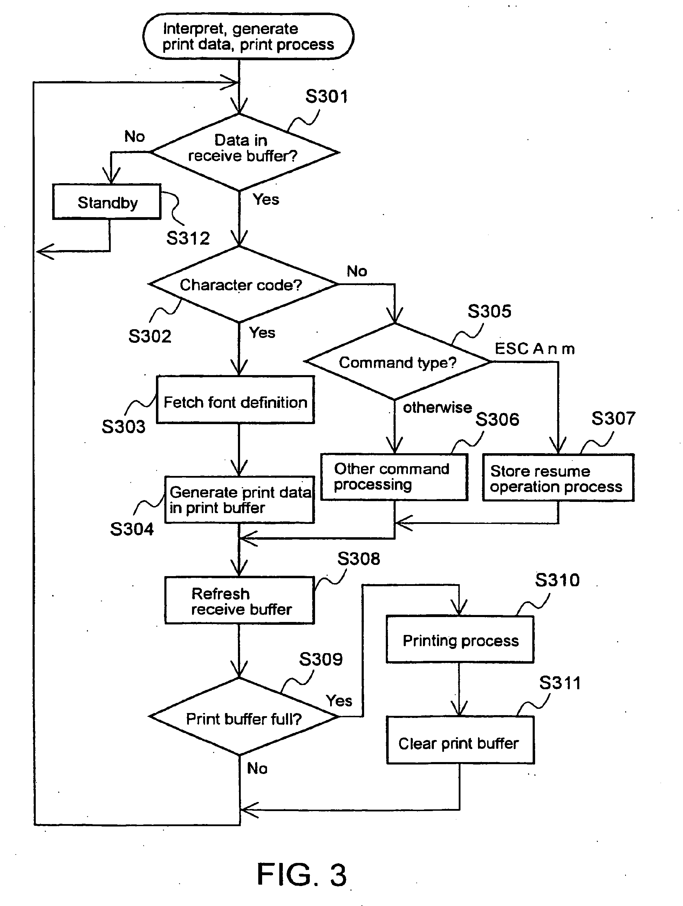

The process whereby the data stored in receive buffer 104 is interpreted and print data is generated in print buffer 107 and then printed, is described next with reference to the flow chart in Fig. 3.
(1) In step S301 it is detected whether there is any data in receive buffer 104. If not, the printer enters a standby state. If there is data, the control advances to the next step S302.
(2) In step S302 it is checked whether the data in receive buffer 104 is a character code (S302).
(3) If it is a character code, the font definition for that character code is read from the font ROM 106 (S303) and corresponding print data is generated in print buffer 107 (S304) whereupon the control passes to the process (8) below.
(4) If, in step S302, it is found that the data in receive buffer 104 is not a character code, the data must represent a control command and the command type is determined in step S305.
(5) If step S305 reveals the command is the *ESC A* command specifying the resumption operation to be performed, the control passes to the process (7) below.
(6) If step S305 detects any other type of command, the corresponding process is performed (S306), and the control passes on to the process (8) below.
(7) Parameter *n* is detected, and parameter *m* is stored in the appropriate parameter *n* storage area to define the resumption operation to be performed for the off-line state cause (S307) represented by parameter n.
(8) The receive buffer 104 is refreshed (S308). This increases available memory in the receive buffer 104 by an amount equal to the data processed either in steps S303 and S304 or in step S306.
(9) In step S309 it is then checked whether print buffer 107 is full. If not, the procedure loops back to step S301.
(10) If print buffer 107 is full, print head 109 is driven for the printing process (S310), the print buffer 107 is cleared (S311), and the control loops back to step S301. The printer may be caused to enter the off-line state during the printing process (S310), in which case the control passes to the off-line process.

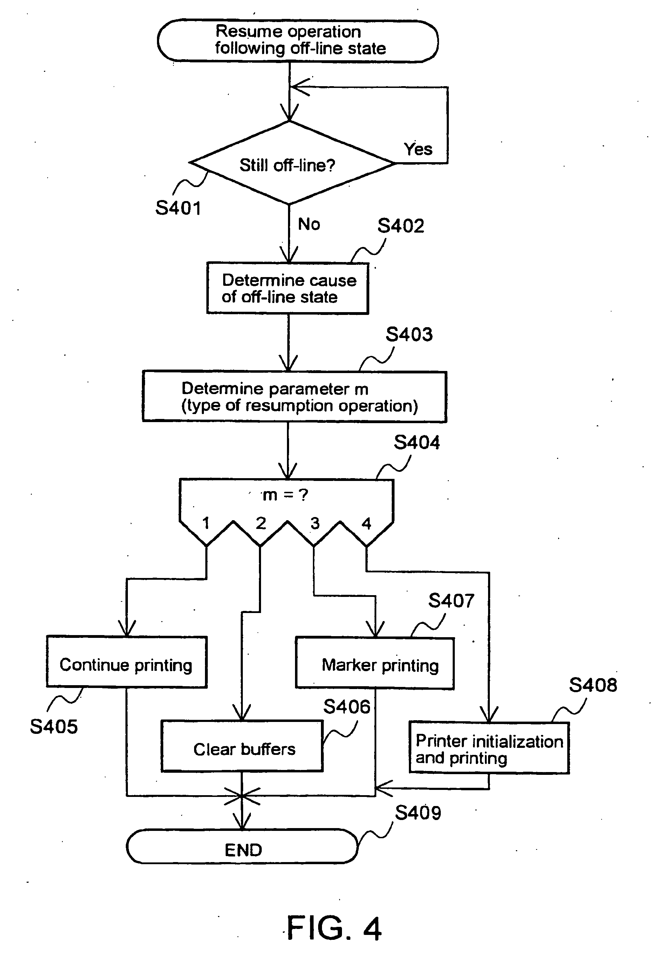

The process for resuming operation after the printer went off-line is described next below with reference to the flow chart in Fig. 4.
(1) The first step is determining whether the printer is still off-line (S401). This step is repeated until the printer recovers from the off-line state. When the cause for the off-line state is removed and the printer is brought on-line again, the control passes to step S402.
(2) The cause for the off-line state is then determined in step S402. In this preferred embodiment of the invention, there are three off-line causes as described above.
(3) The storage area in storage device 108 corresponding to the off-line cause determined in step S402 is then addressed to obtain the value of the parameter *m* that has previously been written into this storage area and that represents the type of resumption operation to be performed (S403).
(4) Based on the value of the parameter *m* read in step S402 the associated resumption operation is then established (S404).
(5) If m = 1 (*Continue Printing*), printing is continued based on the data currently stored in receive buffer 104 and print buffer 107 (S405).
(6) If m = 2 (*Clear Buffers*), the receive buffer 104 and print buffer 107 are cleared (S406).
(7) If m = 3 (*Marker Printing*), the marker printing process is performed (S407). This is described in further detail below.
(8) If m = 4 (*Re-initialize and Print*), the re-initialization and printing process is performed (S408). This is described in further detail below.
(9) This process terminates and passes control to another process (S409). In the manner described above, it is possible to preselect, in accordance with the reason why the printer went off-line, the process, which is to be performed when the printer resumes operation upon recovering from the off-line state. As a result, a respective desired resumption operation can be performed for each of a number of different off-line state causes.

An additional marker registration and marker printing process are described next below. This process registers a marker enabling the printer to return to and resume printing from a particular point in the print data after resuming operation from the off-line state.

When the set marker command *ESC B* is received from the host 102, the printer 101 stores the command as a "marker" in the receive buffer 104. The set marker process described below is performed when the set marker command is detected during command processing (steps S305 and S306 in Fig. 3).
(1) The address of the receive buffer 104 at which the marker, i.e., the data sequence *ESC B* is stored, is stored as a "marker pointer" in a marker storage area reserved in the storage device 108.
(2) The various printer definitions stored in the printer are copied to a marker definition data storage area also reserved in the storage device 108.

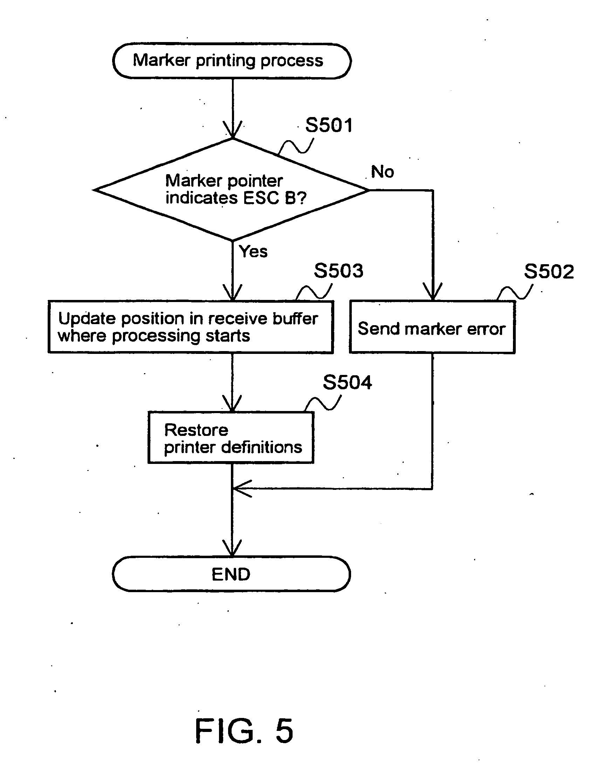

The marker printing process, one of the resumption operations that can be performed when the printer resumes operation upon recovering from the off-line state, is described next with reference to the flow chart in Fig. 5.
(1) The type of data stored at the address in receive buffer 104 indicated by the marker pointer is checked (S501).
(2) If the stored data is the marker *ESC B,* the control passes to the process (4) below.
(3) If the stored data is not the marker, the marker must have been overwritten by subsequently received data. This may happen when the receive buffer 104 is a ring buffer. It is also possible that some other unknown error has occurred in the receive buffer 104. In any case, if the stored data is not the marker, a "marker error" is sent to the host 102 (S502) and the marker printing process terminates. Sending such marker error to the host enables the host to resend all the data, including the printer definitions commands, required for printing the respective receipt.
(4) The read pointer indicating the address of receive buffer 104 that will be read next is then set to the address immediately following the marker (S503). Thus, when data processing is resumed it starts with the data at the address indicated by the read pointer.
(5) The definition data stored in the marker definition data storage area is then copied to the definition data storage area (S504). This makes it possible to restore the printing mode and other printer settings to the settings that were valid when the marker was registered.
(6) When this procedure ends, the control passes back to the printing process, thereby enabling printing to resume with the data immediately following the marker in receive buffer 104.

It will be obvious that a marker can be set at the beginning of each receipt to be printed, by sending a set marker command (*ESC B*) before sending the print data for a respective receipt. By thus setting a marker at the beginning of each receipt, it is possible to return to the marker and resume printing from the beginning of a receipt when the printer resumes operation upon recovering from the off-line state that it had entered for some reason while printing that receipt. In this manner it can be avoided that only the remaining unprinted part of the receipt it printed; instead, printing of the entire receipt from the beginning is repeated. As a result, a complete receipt can be printed on a single form.

While using only one marker is considered in the above preferred embodiment of the invention, it will be obvious that plural markers can be set. The marker pointer and marker definition data storage area must be increased according to the number of markers set. Setting a plurality of markers will also make it possible to resume printing from any desired marker by, for example, specifying whether printing is to be resumed from the most recent marker, the next most recent marker, and so forth. When a plurality of markers is set, it is also possible to assign a number or name to each marker. If each marker is assigned a number, for example, a printing process could target printing from, say, marker "5". Let us assume the following example: a sales receipt, a coupon and a warranty are to be printed, marker "3" is made to precede the sales receipt data, marker "5" the coupon data and marker "1" the warranty data. If marker "5" is designated, marker printing as the selected resumption operation will resume operation with printing the coupon and then the warranty. Note that designation of a particular marker is possible even during the off-line state by means a so-called real-time command. A real-time command is a command that is directly interpreted and processed without or before being stored in the receive buffer. Therefore, real-time commands can be processed even while the printer is in the off-line state. Various known methods can be used to direct the printing process as the number of markers is increased.

Since the printer definitions are stored in a marker definition data storage area, the printer definition command(s) for setting printer definitions used for a plurality of receipts in common need only be output once.

It should be noted that the capacity of the receive buffer 104 is typically significantly greater than the amount of data printed on a single receipt. In this preferred version of the present invention, for example, the capacity of receive buffer 104 is 4 kilobytes while the data printed on one receipt typically occupies no more than 400 bytes. In such cases, the markers are rarely overwritten.

Marker validity is determined in this preferred embodiment by detecting whether a set marker command (ESC B) is stored at the address indicated by the marker pointer, but other methods can be alternatively used. For example, the data storage address and the address indicated by a marker pointer can be compared each time data received from the host is stored in the receive buffer 104. If the data storage address exceeds the address indicated by a marker pointer, the marker is determined invalid, and the marker pointer is set to null. If the marker printing process detects a marker pointer of value null, a marker error is sent to the host 102.

The printer re-initialization command and the re-initialization printing process are described next below.

The processes executed in response to a printer re-initialization command and the re-initialization printing process are similar to the marker registration and marker printing process, respectively, described above. The differences are as follows. The set marker command (*ESC B*) causes the current printer definitions to be saved so that the printer can be reset to the previous settings based on the saved printer definitions when the printer resumes operation. With the printer re-initialization command (*ESC C*), however, the printer definitions are not saved. Instead, in the re-initialization printing process the printer definitions are returned to the default printer definitions, and the print buffer 107 is cleared. Thus, there is no need for a marker pointer storage area or a marker definition data storage area. The printer re-initialization command is therefore particularly suitable for a printer having a limited storage capacity.

When the command *ESC C* is received from the host, the printer 101 stores the command as a in the receive buffer 104. When the command is detected during command processing, the printer sets the printer definitions to default settings and clears print buffer 107.

When re-initialization printing is performed, the receive buffer 104 is searched from the end to the start for an address at which *ESC C* is stored. Data interpretation, print data generation and printing processes are then resumed from the address at which *ESC C* was found.

Since data interpreting begins with the address at which the *ESC C* command is found, *ESC C* will be interpreted first. As a result, the printer definitions are restored to the default settings, and the print buffer 107 is cleared. Normal data processing proceeds thereafter with the data following *ESC C* in receive buffer 104..

As described above, this preferred embodiment searches for an address at which *ESC C* is stored by proceeding from the end to the start of receive buffer 104, and returns the first address that is found, if any, as the search result. Alternatively, the search could proceed from the start to the end of receive buffer 104, including address areas containing data that has already been processed, and return the last address that is found, if any, as the search result.

It is further possible to store, when a printer re-initialization command (*ESC C*) is received and detected, a pointer to the address in the receive buffer 104 at which the command is written. A pointer storage area and a processing similar to that described above for the set marker command (*ESC B*) are required in this case, but the advantage is that the location of *ESC C* in the receive buffer can be determined immediately without searching the receive buffer 104.

As explained above, in re-initialization printing, print command interpreting, data generation and printing proceed from the *ESC C* command address in the receive buffer 104. Executing the printer re-initialization command in the course of re-initialization printing differs from turning the printer off and then on in that the content of receive buffer 104 is not cleared.

When *ESC C* is overwritten in the receive buffer 104, that is, when *ESC C* is not found, a re-initialization command error is sent to the host 102. This is the same as in the marker printing process described above.

Receipt printing using the printer re-initialization command (*ESC C*) and the re-initialization printing process is described below.

The host 102 sends the printer re-initialization command followed by any appropriate printer definition command(s) for that receipt, and then sends the print data, that is, what is to be printed on the receipt. This process is repeated for each receipt to be printed.

It is therefore necessary to output the printer definition command(s) as many times as there are receipts to be printed. While this is somewhat bothersome, the advantage is that a separate storage area is not required for printer definition storage, as is the case with the marker registration and printing process described above. Printer construction is thereby simplified, and printer cost can be reduced.

When printer 101 according to this preferred embodiment of the invention resumes operation, processing is resumed from the beginning of the last receipt processed. In other words, the printer re-initialization command (*ESC C*) can be used to indicate the appropriate point from which processing is to be resumed when the printer recovers from the off-line state.

As described above, a printer according to the present invention can select the process to be performed when resuming operation upon recovery from the off-line state. It is therefore possible to retain any printer definitions stored in the printer when the printer resumes operation, and prevent wasteful receipt printing.

The resumption operation can be freely selected, and the host device can be notified when the selected process cannot be performed or a particular operation such as clearing the buffers has been performed. User-friendliness and ease-of-use when the printer resumes operation are thus greatly improved.

## Claims

1. A printer that is adapted to enter an off-line state In response to each of a plurality of off-line reasons and to perform a resumption operation upon detection of recovery from the off-line state, the printer comprising:
receiving means (103) for receiving data representing print data and control commands, respectively, from a host device (102);
a buffer (104) for storing the received data;
a controller (105) adapted to read the data stored in said buffer (104) and to process the read data unless the printer is In the off-line state during which said processing is interrupted;
a printing unit (109, 110) for printing based on data processed by said controller (105);
memory means for storing a resumption operation setting indicating one of plural kinds of resumption operation: and
means adapted to detect recovery from the off-line slate and to cause the controller to perform the resumption operation that is indicated by said resumption operation setting;
**characterized in that** the controller is adapted
a) to perform, as part of said processing, detection of a predetermined one of said control commands among the data stored in and read from the buffer (104), and
b) to store, in said memory means, a resumption operation setting indicated by that control command.

2. The printer as set forth in claim 1, wherein said plural kinds of resumption operation include one or more of the following operations:
- restarting printing from the start of an area that was being printed when the printer went off-line,
- continuing the command execution process, if any, that was being performed when the printer went off-line,
- clearing the data in said buffer, and
- stopping the command execution process, if any, that was being performed when the printer went off-line.

3. The printer as set forth in claim 1 or 2, further comprising marker means (105, 108) responsive to a predetermined further one of said control commands for storing information specifying a particular position in the buffer (104), wherein said plural kinds of resumption operation include printing from the print data or control command stored at said particular position in the buffer.

4. The printer as set forth in claim 3, wherein said marker means (105, 108) is adapted to store, In response to said predetermined further control command, the current printer settings information, and said plural kinds of resumption operation include resetting the printer according to the settings information stored by said marker means.

5. The printer as set forth in claim 3 or 4, further comprising notification means for notifying the host device of an error if, in the process of the resumption operation performed by said controller, said particular position in the buffer (104) is not detected.

6. The printer as set forth in claim 2, or claim 2 and any one of claims 3 to 5, further comprising notification means for notifying the host device if, as the result of the resumption operation performed by said controller, the data in said buffer (107) are cleared.

7. A method of controlling a printer that is adapted to enter an off-line state in response to each of a plurality of off-line reasons and to perform a resumption operation upon detection of recovery from the off-line state, the method comprising:
a) receiving data representing print data and control commands, respectively, from a host device(102);
b) storing the received data in a buffer (104);
c) reading the data stored in said buffer (104) and processing the read data unless the printer is in the off-line state during which said processing is interrupted, the processing Including printing based on the data stored in said buffer; and
d) performing, upon detection of recovery from the off-line state, that one of plural kinds of resumption operation that is indicated by a resumption operation setting stored in memory means;
**characterized in that**
said processing in step c) further includes
e) detecting a predetermined one of said control commands among the data read from said buffer (104) and storing, In said memory means, a resumption operation setting indicated by that control command.

8. The method as set forth in claim 7, wherein said plural kinds of resumption operation include one or more of the following operations:
- restarting printing from the start of an area that was being printed when the printer went off-line,
- continuing the command execution process, if any, that was being performed when the printer went off-line,
- clearing print data and command data in said buffer, and
- stopping the command execution process, if any, that was being performed when the printer went off-line.

9. The method as set forth in claim 7 or 8, further comprising
j) detecting a predetermined further one among said control commands; and
k) storing, in response to a detection in step (j), information specifying a particular position in said buffer (104),
wherein said plural kinds of resumption operation include printing from the print data or control command stored at said particular position in the buffer.

10. The method as set forth in claim 9, wherein step (k) includes
l) storing the current printer settings information,
wherein said plural kinds of resumption operation include resetting the printer according to the settings information stored in step (I).

11. The method as set forth in any one of claims 7 to 10, further comprising
m) notifying the host device of the result of the resumption operation performed in step i).

12. A system comprising a printer as defined in any one of claims 1 to 6 and an Information processing apparatus connected to the printer and adapted to control the printer by sending thereto data including print data and control commands, the information processing apparatus comprising:
a transmitter for sending a command which requires the printer to perform printing in accordance with the data stored at a predetermined area in said buffer when the printer resumes operation from an off-line state;
a receiver for receiving from the printer an error notification indicating that information specifying said predetermined area is not contained In the buffer; and
re-sending means for resending print the data corresponding to the data stored at the predetermined area in the buffer when the receiver receives the error notification from the printer.

13. The method as set forth in claim 11 further comprising the following steps performed by said host device:
p) sending a command to the printer telling the printer what operation to perform when the printer resumes operation from an off-line state:
q) receiving from the printer a notification concerning a result of a resume operation following an off-line state; and
r) resending to the printer print data and/or control commands when the notification received in step n) indicates that the resume operation could not be successfully executed.

14. An information storage medium readable by a machine, the medium carrying a program of instructions executable by the machine to perform the method as defined in any one of claims 7 to 11 and 13.

## Patentansprüche

1. Drucker, der ausgebildet ist, in einen Offline- bzw. inaktiven Zustand zu gehen in Reaktion auf jeden einer Vielzahl von Inaktivitäts-Gründen und eine Wiederaufnahmeoperation durchzuführen bei Erfassung einer Rückkehr aus dem inaktiven Zustand, wobei der Drucker aufweist:
Empfangsmittel (103) zum Empfangen von Daten, die Druckdaten beziehungsweise Steuerbefehle repräsentieren, von einer Hostvorrichtung (102);
einen Puffer (104) zum Speichern der empfangenen Daten;
eine Steuervorrichtung (105), die ausgebildet ist, die Daten zu lesen, die in dem Puffer (104) gespeichert sind, und die gelesenen Daten zu verarbeiten, außer der Drucker ist in dem inaktiven Zustand, während dem die Verarbeitung unterbrochen ist;
eine Druckeinheit (109, 110) zum Drucken basierend auf Daten, die von der Steuervorrichtung (105) verarbeitet werden;
Speichermittel zum Speichern einer Wiederaufnahmeoperation-Einstellung, die eine aus einer Vielzahl von Arten von Wiederaufnahmeoperationen anzeigt; und
Mittel, das ausgebildet ist, eine Rückkehr aus dem inaktiven Zustand zu erfassen und die Steuervorrichtung zu veranlassen, die Wiederaufnahmeoperation durchzuführen, die durch die Wiederaufnahmeoperation-Einstellung angezeigt wird;
**dadurch gekennzeichnet, dass** die Steuervorrichtung ausgebildet ist,
a) als Teil der Verarbeitung, eine Erfassung eines vorgegebenen der Steuerbefehle aus den Daten durchzuführen, die in dem Puffer (104) gespeichert sind und daraus gelesen werden, und
b) in dem Speichermittel eine Wiederaufnahmeoperation-Einstellung zu speichern, die durch den Steuerbefehl angezeigt wird.

2. Drucker gemäß Anspruch 1, wobei die Vielzahl von Arten von Wiederaufnahmeoperationen eine oder mehrere der folgenden Operationen umfassen:
- erneutes Starten eines Druckens von dem Beginn eines Bereichs, der gedruckt wurde, als der Drucker inaktiv wurde bzw. offline ging,
- Fortsetzen des Prozesses zur Befehlsausführung, wenn vorhanden, der durchgeführt wurde, als der Drucker inaktiv wurde,
- Löschen der Daten in dem Puffer, und
- Anhalten des Prozesses zur Befehlsausführung, wenn vorhanden, der durchgeführt wurde, als der Drucker inaktiv wurde.

3. Drucker gemäß Anspruch 1 oder 2, der weiter Markierungsmittel (105, 108) aufweist in Reaktion auf einen vorgegebenen weiteren der Steuerbefehle zum Speichern von Information, die eine bestimmte Position in dem Puffer (104) spezifiziert, wobei die Vielzahl von Arten von Wiederaufnahmeoperationen ein Drucken aus den Druckdaten oder dem Steuerbefehl, die/der an der bestimmten Position in dem Puffer gespeichert sind/ist, umfassen.

4. Drucker gemäß Anspruch 3, wobei das Markierungsmittel (105, 108) ausgebildet ist, in Reaktion auf den vorgegebenen weiteren Steuerbefehl, die aktuelle Druckereinstellungsinformation zu speichern, und wobei die Vielzahl von Arten von Wiederaufnahmeoperationen umfassen ein Zurücksetzen des Druckers gemäß der Einstellungsinformation, die durch das Markierungsmittel gespeichert ist.

5. Drucker gemäß Anspruch 3 oder 4, der weiter Benachrichtigungsmittel aufweist zum Benachrichtigen der Hostvorrichtung über eine Störung, wenn in dem Prozess der Wiederaufnahmeoperation, die durch die Steuervorrichtung durchgeführt wird, die bestimmte Position in dem Puffer (104) nicht erfasst wird.

6. Drucker gemäß Anspruch 2, oder Anspruch 2 und einem der Ansprüche 3 bis 5, der weiter aufweist Benachrichtigungsmittel zum Benachrichtigen der Hostvorrichtung, wenn als das Resultat der Wiederaufnahmeoperation, die von der Steuervorrichtung durchgeführt wird, die Daten in dem Puffer (107) gelöscht werden.

7. Verfahren zum Steuern eines Druckers, der ausgebildet ist, in einen inaktiven Zustand zu gehen in Reaktion auf jeden einer Vielzahl von Inaktivitäts-Gründen und eine Wiederaufnahmeoperation durchzuführen bei Erfassung einer Rückkehr aus dem inaktiven Zustand, wobei das Verfahren aufweist:
a) Empfangen von Daten, die Druckdaten beziehungsweise Steuerbefehle repräsentieren, von einer Hostvorrichtung (102);
b) Speichern der empfangenen Daten in einem Puffer (104);
c) Lesen der Daten, die in dem Puffer (104) gespeichert sind, und Verarbeiten der gelesenen Daten, außer der Drucker ist in dem inaktiven Zustand, während dem die Verarbeitung unterbrochen ist, wobei die Verarbeitung ein Drucken basierend auf den Daten umfasst, die in dem Puffer gespeichert sind; und
d) Durchführen, bei Erfassung einer Rückkehr aus dem inaktiven Zustand, derjenigen aus der Vielzahl von Arten von Wiederaufnahmeoperationen, die durch eine Wiederaufnahmeoperation-Einstellung angezeigt wird, die in einem Speichermittel gespeichert ist;
**dadurch gekennzeichnet, dass**
die Verarbeitung in Schritt c) weiter umfasst
e) Erfassen eines vorgegebenen der Steuerbefehle aus den Daten, die aus dem Puffer (104) gelesen werden, und Speichern in dem Speichermittel einer Wiederaufnahmeoperation-Einstellung, die durch den Steuerbefehl angezeigt wird.

8. Verfahren gemäß Anspruch 7, wobei die Vielzahl von Arten von Wiederaufnahmeoperationen eine oder mehrere der folgenden Operationen umfassen:
- erneutes Starten eines Druckens von dem Beginn eines Bereichs, der gedruckt wurde, als der Drucker inaktiv wurde,
- Fortsetzen des Prozesses zur Befehlsausführung, wenn vorhanden, der durchgeführt wurde, als der Drucker inaktiv wurde,
- Löschen der Druckdaten und Befehlsdaten in dem Puffer, und
- Anhalten des Prozesses zur Befehlsausführung, wenn vorhanden, der durchgeführt wurde, als der Drucker inaktiv wurde.

9. Verfahren gemäß Anspruch 7 oder 8, das weiter aufweist
j) Erfassen eines vorgegebenen weiteren der Steuerbefehle; und
k) Speichern, in Reaktion auf eine Erfassung in Schritt (j), von Information, die eine bestimmte Position in dem Puffer (104) spezifiziert,
wobei die Vielzahl von Arten von Wiederaufnahmeoperationen umfassen ein Drucken aus den Druckdaten oder dem Steuerbefehl, die/der an der bestimmten Position in dem Puffer gespeichert sind/ist.

10. Verfahren gemäß Anspruch 9, wobei Schritt (k) umfasst
l) Speichern der aktuellen Druckereinstellungsinformation,
wobei die Vielzahl von Arten von Wiederaufnahmeoperationen umfassen ein Zurücksetzen des Druckers gemäß der Einstellungsinformation, die in Schritt (I) gespeichert wird.

11. Verfahren gemäß einem der Ansprüche 7 bis 10, das weiter aufweist
m) Benachrichtigen der Hostvorrichtung über das Resultat der Wiederaufnahmeoperation, die in Schritt i) durchgeführt wird.

12. System, das aufweist einen Drucker gemäß einem der Ansprüche 1 bis 6 und eine Informationsverarbeitungsvorrichtung, die mit dem Drucker verbunden ist und ausgebildet ist, den Drucker zu steuern durch Senden von Daten an diesen, einschließlich Druckdaten und Steuerbefehle, wobei die Informationsverarbeitungsvorrichtung aufweist:
einen Sender zum Senden eines Befehls, der erfordert, dass der Drucker ein Drucken durchführt in Übereinstimmung mit den Daten, die in einem vorgegebenen Bereich in dem Puffer gespeichert sind, wenn der Drucker eine Operation aus einem inaktiven Zustand wiederaufnimmt;
einen Empfänger zum Empfangen einer Störungsbenachrichtigung von dem Drucker, die anzeigt, dass Information, die den vorgegebenen Bereich spezifiziert, nicht in dem Puffer enthalten ist; und
"erneutes Senden"-Mittel zum erneuten Senden der Druckdaten, die den Daten entsprechen, die in dem vorgegebenen Bereich in dem Puffer gespeichert sind, wenn der Empfänger die Störungsbenachrichtigung von dem Drucker empfängt.

13. Verfahren gemäß Anspruch 11, das weiter die folgenden Schritte aufweist, die durch die Hostvorrichtung durchgeführt werden:
p) Senden eines Befehls an den Drucker, der dem Drucker mitteilt, welche Operation durchzuführen ist, wenn der Drucker eine Operation aus einem inaktiven Zustand wiederaufnimmt;
q) Empfangen, von dem Drucker, einer Benachrichtigung hinsichtlich eines Resultats einer Wiederaufnahmeoperation nach einem inaktiven Zustand; und
r) erneutes Senden von Druckdaten und/oder Steuerbefehlen an den Drucker, wenn die Benachrichtigung, die in Schritt n) empfangen wird, anzeigt, dass die Wiederaufnahmeoperation nicht erfolgreich ausgeführt werden konnte.

14. Informationsspeichermedium, das durch eine Maschine lesbar ist, wobei das Medium ein Programm von Anweisungen trägt, die durch die Maschine ausführbar sind, um das Verfahren gemäß einem der Ansprüche 7 bis 11 und 13 durchzuführen.

## Revendications

1. Imprimante qui est conçue pour entrer dans un état hors- ligne en réaction à chacune d'une pluralité de raisons d'entrer hors-ligne et pour effectuer une reprise après détection d'une sortie de l'état hors-ligne, l'imprimante comprenant :
des moyens (103) de réception pour recevoir des données représentant des données d'impression et des instructions de commande, respectivement, d'un dispositif (102) hôte ;
un tampon (104) pour mémoriser les données reçues ;
un dispositif (105) de commande conçu pour lire les données mémorisées dans le tampon (104) et pour traiter les données lues, à moins que l'imprimante soit dans un état hors-ligne pendant lequel le traitement est interrompu ;
une unité (109, 110) d'impression pour imprimer sur la base des données traitées par le dispositif (105) de commande ;
des moyens de mémorisation pour mémoriser un réglage d'opérations de reprise indiquant l'un de plusieurs types d'opérations de reprise ; et
des moyens conçus pour détecter une sortie de l'état hors-ligne et pour faire que le dispositif de commande effectue l'opération de reprise qui est indiquée par le réglage d'opération de reprise ;
**caractérisée en ce que** le dispositif de commande est conçu
a) pour effectuer, en tant que partie dudit traitement, une détection de l'une déterminée à l'avance des instructions de commande parmi les données mémorisées dans le tampon (104) et lues dans celui-ci; et
b) pour mémoriser, dans les moyens de mémorisation, un réglage d'une opération de reprise indiqué par cette instruction de commande.

2. Imprimante suivant la revendication 1, dans laquelle les plusieurs types d'opérations de reprise comprennent une ou plusieurs des opérations suivantes :
- recommencer l'impression à partir du début d'une zone qui était imprimée lorsque l'imprimante est passée hors-ligne,
- continuer l'opération d'exécution de l'instruction, s'il y en a une, qui était effectuée lorsque l'imprimante est passée hors-ligne,
- supprimer les données dans le tampon, et
- arrêter l'opération d'exécution de l'instruction, s'il y en a une, qui était effectuée lorsque l'imprimante est passée hors-ligne.

3. Imprimante suivant la revendication 1 ou 2, comprenant en outre des moyens (105, 108) de marquage sensibles à une autre déterminée à l'avance des instructions de commande pour mémoriser de l'information précisant une position particulière dans le tampon (104), dans laquelle les plusieurs types d'opérations de reprise comprennent l'impression à partir des données d'impression ou de l'instruction de commande mémorisée en la position particulière dans le tampon.

4. Imprimante suivant la revendication 3, dans laquelle les moyens (105, 108) de marquage sont conçus pour mémoriser, en réaction à l'autre instruction de commande déterminée à l'avance, l'information de présence de réglage de l'imprimante et les plusieurs types d'opérations de reprise comprennent le re-réglage de l'imprimante suivant l'information de réglage mémorisée par les moyens de marquage.

5. Imprimante suivant la revendication 3 ou 4, comprenant en outre des moyens de notification pour notifier au dispositif hôte une erreur si, au cours de l'opération de reprise effectuée par le dispositif de commande, la position particulière dans le tampon (104) n'est pas détectée.

6. Imprimante suivant la revendication 2, ou revendication 2 et l'une quelconque des revendications 3 à 5, comprenant en outre des moyens de notification pour notifier au dispositif hôte si, en tant que résultat de l'opération de reprise effectuée par le dispositif de commande, les données dans le tampon (107) sont supprimées.

7. Procédé de commande d'une imprimante qui est conçue pour entrer dans un état hors-ligne en réaction à chacune d'une pluralité de raisons d'entrer hors-ligne et pour effectuer une opération de reprise après détection de la sortie de l'état hors-ligne, procédé dans lequel :
a) on reçoit des données représentant des données d'impression et des instructions de commande, respectivement, d'un dispositif (102) hôte ;
b) on mémorise les données reçues dans un tampon (104) ;
c) on lit les données mémorisées dans le tampon (104) et on traite les données lues, à moins que l'imprimante soit dans l'état hors-ligne pendant lequel le traitement est interrompu, le traitement comprenant une impression sur la base des données mémorisées dans le tampon ;
d) on effectue, après détection d'une sortie de l'état hors-ligne, celui des plusieurs types d'opérations de reprise qui est indiqué par un réglage d'opération de reprise mémorisé dans les moyens de mémorisation,
**caractérisé en ce que**
le traitement au stade c) comprend en outre
e) la détection de l'une déterminée à l'avance des instructions de commande parmi les données lues dans le tampon (104) et la mémorisation dans les moyens de mémorisation d'un réglage d'opérations de reprise indiqué par cette instruction de commande.

8. Procédé suivant la revendication 7, dans lequel les plusieurs types d'opérations de reprise comprennent une ou plusieurs des opérations suivantes :
- recommencer l'impression à partir du début d'une zone qui était imprimée lorsque l'imprimante est passée hors-ligne,
- continuer l'opération d'exécution de l'instruction, s'il y en a une, qui était effectuée lorsque l'imprimante est passée hors-ligne,
- supprimer les données dans le tampon, et
- arrêter l'opération d'exécution de l'instruction, s'il y en a une, qui était effectuée lorsque l'imprimante est passée hors-ligne.

9. Procédé suivant la revendication 7 ou 8, comprenant en outre
j) la détection d'une autre déterminée à l'avance des instructions de commande ; et
k) la mémorisation en réaction à une détection au stade j) d'une information précisant une position particulière dans le tampon (104),
dans lequel les plusieurs types d'opérations de reprise comprennent une impression à partir de la donnée d'impression ou de l'instruction de commande mémorisée en la position particulière dans le tampon.

10. Procédé suivant la revendication 9, dans lequel le stade k) comprend
l) la mémorisation de l'information présente de réglage de l'imprimante,
dans lequel les plusieurs types d'opérations de reprise comprennent le re-réglage de l'imprimante suivant l'information de réglage mémorisée au stade (i).

11. Procédé suivant l'une quelconque des revendications 7 à 10, comprenant en outre
m) la notification au dispositif hôte du résultat de l'opération de reprise effectuée au stade i).

12. Système comprenant une imprimante telle que définie suivant l'une quelconque des revendications 1 à 6 et un dispositif de traitement de l'information relié à l'imprimante et conçu pour commander l'imprimante en y envoyant des données, comprenant des données d'impression et des instructions de commande, le dispositif de traitement de l'information comprenant :
un émetteur pour envoyer une instruction qui demande à l'imprimante d'effectuer une impression en fonction des données mémorisées dans une zone déterminée à l'avance du tampon lorsque l'imprimante reprend un fonctionnement à partir d'un état hors-ligne ;
un récepteur pour recevoir de l'imprimante une notification d'erreur indiquant que la zone déterminée à l'avance n'est pas contenue dans le tampon ; et
des moyens d'envoi nouveaux pour envoyer à nouveau les données d'impression correspondants mémorisées dans la zone déterminée à l'avance du tampon lorsque le récepteur reçoit la notification d'erreur de l'imprimante.

13. Procédé suivant la revendication 1, comprenant en outre les stades suivants effectués par le dispositif hôte :
p) l'envoi d'une instruction à l'imprimante disant à l'imprimante l'opération qui doit être effectuée lorsque l'imprimante reprend un fonctionnement à partir d'un état hors-ligne ;
q) la réception par l'imprimante d'une notification concernant un résultat d'une opération de reprise faisant suite à un état hors-ligne ; et
r) l'envoi à nouveau à l'imprimante de données d'imprimante et/ou d'instructions de commande lorsque la notification reçue au stade n) indique que l'opération de reprise ne peut pas être exécutée avec succès.

14. Support de mémorisation d'information pouvant être lu par une machine, le support portant un programme d'instructions pouvant être exécuté par la machine pour effectuer le procédé tel que défini à l'une quelconque des revendications 7 à 11 et 13.
